# FASCICULE DE BREVET EUROPEEN

(11) **EP 1 526 926 B1**
(45) Date de publication et mention de la délivrance du brevet: **02.01.2008**
(21) Numéro de dépôt: 03760724.9
(22) Date de dépôt: 12.06.2003
(51) Int. Cl.: B07C 3/20

(54) **PROCEDE DE TRAITEMENT D'OBJETS POSTAUX UTILISANT LA SYNTHESE VOCALE**
VERFAHREN ZUR VERARBEITUNG VON POSTSTÜCKEN UNTER VERWENDUNG VON SPRACHSYNTHESEN
METHOD FOR PROCESSING POSTAL OBJECTS USING SPEECH SYNTHESIS

(30) Priorité: 19.06.2002 FR 0207581
(43) Date de publication de la demande: 04.05.2005
(73) Titulaire: Solystic, 94257 Gentilly Cedex (FR)
(72) Inventeur: BOURGEOIS, Francis, F-91700 Saint Genevieve des Bois (FR)
(74) Mandataire: Prugneau, Philippe
(86) Numéro de dépôt international: PCT/FR2003/001764
(87) Numéro de publication internationale: WO 2004/000472

(56) Documents cités:
- US-A- 4 921 107
- US-A- 5 558 232
- US-A- 5 677 834

## Description

L'invention concerne un procédé pour le traitement d'objets postaux dans lequel une image d'un objet postal est présentée sur un poste de vidéocodage, et sur la base de cette présentation, un opérateur est sollicité pour fournir une information d'adresse postale à travers le poste de vidéocodage, comme connu du US-A-5,558,232, US-A-4,921,107 ou US-A-5,677,834.

Un processus de tri automatique d'objets postaux du type lettre, objet plat ou paquet inclut généralement la saisie d'une image numérique de chaque objet. Un traitement de reconnaissance optique de caractères est appliqué ensuite à cette image pour identifier l'adresse de destinataire figurant sur l'objet postal. Ce traitement de reconnaissance peut échouer, c'est à dire fournir une solution ayant un taux de confiance très faible, ou plusieurs solutions parmi lesquelles il n'a pas été possible de choisir. Ce qui est appelé ici solution correspond par exemple à une partie de l'adresse de destinataire non reconnue : nom de voie, nom de compagnie ou de personne, numéro dans la voie, numéro de boîte postale.

Dans un tel cas d'échec, l'image numérique de l'objet est présentée sur un écran du poste de vidéo-codage pour qu'un opérateur fournisse une information d'adresse, c'est à dire pour qu'il confirme l'une des solutions proposées. Pour ce faire, l'image et les solutions sont affichés simultanément pour que l'opérateur effectue sa sélection en comparant chaque solution avec l'adresse figurant dans l'image. Compte tenu du débit élevé de traitement sur une installation de tri, une telle opération est fastidieuse pour l'opérateur puisqu'il doit pour chaque objet postal effectuer plusieurs lectures dans l'écran afin de fournir son information d'adresse.

Le but de l'invention est de proposer une amélioration aux procédés de vidéocodage existants pour améliorer le confort de l'opérateur et réduire le temps de traitement.

A cet effet, l'invention a pour objet un procédé pour le traitement d'objets postaux dans lequel une image d'un objet postal est présentée sur un poste de vidéocodage, et sur la base de cette présentation, un opérateur est sollicité pour fournir une information d'adresse postale à travers le poste de vidéocodage, caractérisé en ce que l'opérateur est sollicité par synthèse vocale. Avec ce procédé, l'opérateur lit l'adresse figurant dans l'image en même temps qu'une solution lui est énoncée par synthèse vocale. Avantageusement, la solution est proposée à l'opérateur à travers un casque d'écoute. Dans le cas ou plusieurs solutions sont possibles, elles sont proposées énoncées successivement à l'opérateur.

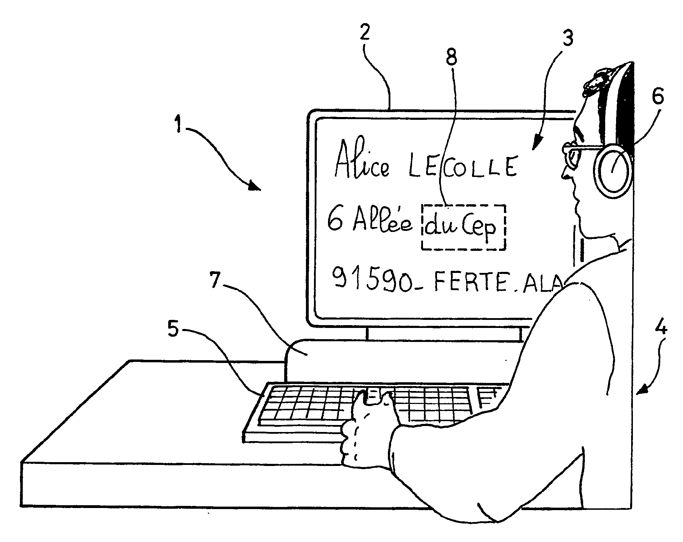

L'invention sera maintenant décrite plus en détail et en référence à la figure unique qui est une représentation schématique d'un poste de vidéocodage dans lequel est mis en oeuvre le procédé selon l'invention.

L'idée à la base de l'invention est d'utiliser la synthèse vocale pour que l'opérateur lise l'adresse figurant dans l'image qui lui est présentée en même temps qu'une solution lui est énoncée par synthèse vocale.

Plus particulièrement, la figure unique fait apparaître un poste de vidéocodage 1 relié à un système de gestion informatisé d'une installation de tri postal, ce poste inclut un écran 2 pour afficher des images numériques 3 d'objets postaux à un opérateur 4. Ce poste de vidéocodage reçoit du système de gestion informatisé une ou plusieurs solutions résultant d'un traitement de reconnaissance optique de caractères appliqué à l'image 3. Selon l'invention, les solutions sont proposées à l'opérateur par voix de synthèse vocale, de telle sorte qu'en comparant l'adresse qui lui est présentée dans l'image 3 à la solution qui lui est énoncée, l'opérateur 4 fournit son information d'adresse en confirmant ou en infirmant la solution proposée. Avantageusement, le poste est agencé pour que l'opérateur puisse confirmer la solution qui lui est énoncée par appui sur une seule touche du clavier 5.

Le poste de vidéocodage pourra inclure un casque d'écoute 6 relié à l'unité centrale 7 pour améliorer le confort de travail de l'opérateur 4. L'utilisation d'un tel casque 6 permet d'équiper les différents postes de vidéocodage présents dans une même salle de vidéocodage pour utiliser la synthèse vocale sur chaque poste sans que les opérateurs ne se perturbent mutuellement.

Dans l'exemple de la figure unique, le poste de vidéocodage est un ordinateur équipé d'un programme de synthèse vocale, relié au casque d'écoute 6 à travers une carte son. Ce poste de vidéocodage qui est connecté au système de gestion de l'installation de tri est ainsi apte à convertir les solutions issues du traitement de reconnaissance qui sont des messages textuels en des signaux sonores audibles par l'opérateur dans le casque 6. De tels programmes de synthèse vocale sont actuellement disponibles sur le marché. Avantageusement, le programme de synthèse vocale choisi sera capable de travailler dans plusieurs langues. En effet, dans un pays bilingue comme par exemple la Belgique, les adresses de destinataires peuvent être inscrites en Français, ou en Néerlandais. Il est donc indispensable que le programme de synthèse vocale effectue la lecture en Français ou en Néerlandais, en fonction des résultats donnés par le traitement de reconnaissance optique de caractères.

En cas d'échec du traitement de reconnaissance optique de caractères, ce dernier peut retourner une pluralité de solutions possibles, avec un taux de confiance associé à chacune d'elles. Dans ce cas, les différentes solutions sont énoncées successivement à l'opérateur jusqu'à ce qu'il confirme la bonne pour résoudre l'ambiguïté issue du traitement. Avantageusement, les différentes solutions sont énoncées par ordre de confiance décroissant, pour que la première solution énoncée ait la plus grande probabilité d'être la bonne. Dans le cas où l'opérateur infirme toutes les solutions proposées, le système de gestion pourra avantageusement être agencé pour proposer à l'opérateur de saisir manuellement l'adresse qu'il lit dans l'image.

Pour améliorer la vitesse de prise d'information par l'opérateur, l'adresse ou la partie d'adresse non reconnue par le traitement peut être encadrée ou bien extraite de l'image originale. En se reportant à nouveau à la figure unique, l'image numérique 3 correspond à un bloc adresse dans lequel un mot correspondant au nom de la voie 8 est entouré en pointillés pour indiquer à l'opérateur qu'il s'agit de la partie restant à identifier. Ainsi, l'énumération des différentes solutions se résume à l'énumération d'une pluralité de noms de voies, ce qui procure un gain de temps supplémentaire dans le vidéocodage.

L'invention peut également s'appliquer à la saisie manuelle codée sur un poste de vidéocodage. La saisie manuelle codée est utilisée par exemple dans le cas où aucune des solutions proposées à l'issue du traitement de reconnaissance automatique de caractères n'a été confirmée par l'opérateur. Pour réduire le temps de saisie, l'opérateur saisit seulement sur son clavier une partie de la ligne d'adresse non reconnue, encore appelé extrait. Un programme de gestion attribue ensuite une valeur à cet extrait, mais il arrive que plusieurs solutions correspondent à un même extrait. Dans ce cas, le poste de vidéocodage est agencé pour solliciter l'opérateur par synthèse vocale en lui énonçant successivement les différentes solutions correspondant à l'extrait qu'il a saisi. Plus particulièrement les différentes solutions sont alors énumérées les unes après les autres jusqu'à ce que l'opérateur confirme celle qu'il souhaite saisir en utilisant par exemple le clavier du poste.

En pratique, le poste de vidéo-codage 1 illustré sur la figure est sous la commande d'une application logicielle multi-tâches utilisant le système d'exploitation « Windows NT, 2000 ». Cette application fait partie d'un ensemble plus vaste incluant un serveur d'images et un système de supervision, lesquels font partie du système de tri constitué des machines de tri ( lettres, objets plats, paquets ), des systèmes de reconnaissance automatique d'adresse OCR, des lecteurs de codes à barre, etc....

Le système de supervision est une application logicielle graphique de type « Windows » possédant des fenêtres et des menus déroulant pour contrôler et gérer les stocks d'images et la base de résultats du serveur d'images d'une part et gérer les connexions et les affectations des opérateurs de vidéo-codage à des tâches de codage d'autre part.

Le serveur d'images reçoit en entrée les images non résolues complètement par les systèmes de reconnaissance d'adresses OCR situés en amont sur le processus de tri. Dans le cas des images non résolues complètement, les systèmes OCR transmettent vers le serveur d'images les résultats partiels qu'ils ont réussi à déterminer. Le serveur d'images stocke dans des files d'images distinctes les images à traiter et ceci en fonction des résultats obtenus ( aucune information, code postal, plusieurs hypothèses de rues, rue déterminée mais numéro de voie non déterminé.... ). Cette organisation permet ensuite d'affecter des consoles de codage à des files d'images spécifiques afin de rendre le vidéocodage plus efficace. Le serveur d'images soumet ces images aux consoles de codage et reçoit en retour des résultats. Ceux ci permettent au serveur d'images de prendre une décision sur la poursuite ou l'arrêt du traitement des images. Le serveur d'images stocke ces résultats dans une base de résultats pour émission vers les machines de tri. Les différents éléments du système de vidéocodage ( logiciel de supervision, console de codage, serveur d'images ) communiquent entre eux par échanges de messages à l'aide du protocole de communication « TCP/IP ».

Sur le poste de vidéo-codage 1 est installée une base de données postales utilisée par le logiciel de vidéo-codage dans les tâches de codage pour la résolution des adresses. Cette base postale est identique à celle utilisée sur les systèmes OCR situées en amont. La synthèse vocale est une fonctionnalité intégrée dans l'application logicielle de vidéo-codage sous la forme d'une librairie qui permet entre autres de régler la fréquence d'échantillonnage, la langue utilisée, le protocole de communication de la carte son.

Lorsqu'un opérateur se connecte sur une console de vidéo-codage, sa demande de connexion est transmise au système de supervision et si la demande de connexion est acceptée, le système de supervision transmet à la console par un canal de communication la liste des files d'images ( et donc des tâches de codage ) affectées à la console par le superviseur. Le logiciel de vidéo-codage sur la console transmet alors au travers d'un autre canal de communication des requêtes vers le serveur d'images pour récupérer les images d'adresses non résolues complètement avec les données concernant les résultats de la reconnaissance automatique par OCR. Ces données incluent classiquement les informations suivantes :
■ les coordonnées dans l'image des blocs des composants de l'adresse : ligne acheminement, ligne géographique, ligne destinataire .....
■ les informations reconnues automatiquement dans ces blocs : code postal , ville, rue, liste de rues. Ces informations se présentent en grande partie sous forme de texte.
■ Les informations sur la nature de la tâche à réaliser par vidéo-codage ( saisie d'extrait de nom de rue, confirmation de nom de rue .... )

Après l'affichage de l'image sur l'écran 2 du poste de vidéo-codage, le logiciel de vidéo-codage extrait les informations concernant la nature de la tâche à réaliser et exploite les coordonnées des blocs d'adresse pour tracer un cadre (montré sur la figure en trait pointillé) autour d'une information d'adresse nécessitant un traitement par vidéo-codage. Cette information est disponible dans le logiciel de vidéo-codage sous forme de texte et est soumise à la librairie de synthèse vocale au travers d'une de ses fonctions d'accès pour être restituée sous la forme sonore au travers du casque 6.

Parallèlement à la soumission du texte vers la librairie de synthèse vocale, le logiciel de vidéo-codage scrute les touches du clavier 5 enfoncées par l'opérateur pendant le processus de synthèse vocale.

Avec cette fonctionnalité supplémentaire de synthèse vocale, on peut augmenter de façon très significative le débit du vidéo-codage du fait du parallélisme des tâches d'affichage de l'image et d'énoncé sous forme vocale des solutions à confirmer. Ainsi, on peut augmenter d'environ 10% le débit du vidéo-codage par rapport à des systèmes de vidéo-codage n'exploitant pas la synthèse vocale.

## Revendications

1. Procédé pour le traitement d'objets postaux dans lequel une image (3) d'un objet postal est présentée sur un poste de vidéocodage (1), et sur la base de cette présentation, un opérateur (4) est sollicité pour fournir une information d'adresse postale à travers le poste de vidéocodage, **caractérisé en ce que** l'opérateur (4) est sollicité par synthèse vocale.

2. Procédé selon la revendication 1, dans lequel l'opérateur (4) est sollicité par synthèse vocale à travers un casque d'écoute (6).

3. Procédé selon la revendication 1 ou 2, dans lequel l'opérateur est sollicité par synthèse vocale pour la résolution d'ambiguïté dans l'adresse postale de l'objet postal.

4. Procédé selon la revendication 1, 2 ou 3, dans lequel l'opérateur fournit une information d'adresse par appui sur une seule touche d'un clavier (5) du poste de vidéocodage.

5. Procédé selon les revendications 3 et 4, dans lequel en appuyant sur ladite touche dudit clavier (5), l'opérateur confirme une solution qui lui est énoncée par synthèse vocale.

## Claims

1. A method of processing postal objects, in which method an image (3) of a postal object is presented on a video-coding station (1), and, on the basis of said presentation, an operator (4) is requested to provide postal address information via the video-coding station, said method being **characterised in that** the request is spoken to the operator (4) by voice synthesis

2. A method according to claim 1, in which the request is spoken to the operator (4) by voice synthesis via headphones (6).

3. A method according to anyone of claims 1 or 2, in which the operator is requested by voice synthesis to resolve ambiguity in the postal address of the postal object.

4. A method according to anyone of claims 1, 2 or 3, in which the operator provides address information by depressing a single key of a keyboard (5) of the video-coding station.

5. A method according to claims 3 and 4, in which, by depressing said key of said keyboard (5), the operator confirms a solution that is spoken to said operator by voice synthesis.

## Patentansprüche

1. Verfahren zur Behandlung von Postgegenständen, in dem ein Bild (3) eines Postgegenstandes auf einer Video-Kodierungsstelle (1) dargestellt ist und auf Grundlage dieser Darstellung ein Bediener (4) aufgefordert wird, eine Information zur Postadresse durch die Video-Kodierungsstelle bereit zu stellen, **dadurch gekennzeichnet, dass** der Bediener (4) durch eine Stimmsynthese, aufgefordert wird.

2. Verfahren gemäß Anspruch 1, in dem der Bediener (4) durch eine Stimmsynthese durch einen Kopfhörer (6) aufgefordert wird.

3. Verfahren gemäß Anspruch 1 oder 2, in dem der Bediener durch eine Stimmsynthese zur Auflösung der Zweideutigkeit in der Postadresse eines Postgegenstandes aufgefordert wird.

4. Verfahren gemäß Anspruch 1, 2 oder 3, in dem der Bediener eine Adressinformation durch Bedienung nur einer Taste einer Tastatur (5) der Video-Kodierungsstelle bereitstellt.

5. Verfahren gemäß den Ansprüchen 3 und 4, in dem der Bediener eine Lösung, die ihm durch Stimmsynthese ausgegeben wird, bestätigt, indem er auf besagte Taste der besagten Tastatur (5) drückt.
